# EUROPEAN PATENT APPLICATION

(11) **EP 3 514 062 A1**
(43) Date of publication of application: **24.07.2019**
(21) Application number: 16916277.3
(22) Date of filing: 16.09.2016
(51) Int. Cl.: B64D 11/06

(54) **AIRCRAFT SEAT UNIT AND MULTIPLE SEAT STRUCTURE**

(71) Applicant: Jamco Corporation, Mitaka-shi, Tokyo 181-8571 (JP)
(72) Inventor: KIMIZUKA, Ken, Mitaka-shi Tokyo 181-8571 (JP); KATAKURA, Sachiko, Mitaka-shi Tokyo 181-8571 (JP); ODA, Sayoko, Mitaka-shi Tokyo 181-8571 (JP)
(74) Representative: Novaimo
(86) International application number: PCT/JP2016/077504
(87) International publication number: WO 2018/051496

(57) **Abstract**

An aircraft seat unit including: a seat configured to change form between a seat state and a bed state; a right side panel that is arranged upright at a right side of the seat; a left side panel that is arranged to oppose the right side panel; and a back surface panel that is arranged upright at a back surface side of the seat so as to connect the right side panel and the left side panel, wherein the right side panel stores a right side footrest portion in an extendable/storable manner and the left side panel stores a left side footrest portion in an extendable/storable manner.

## Description

### Technical Field

The present invention relates to an aircraft seat unit to be installed in the passenger cabin of an aircraft.

### Background Art

Among the seat units provided in aircrafts, seats for arrangement in spaces partitioned by wall-like members or the like, and that are capable of selectively changing between a seat state in which the backrest stands upright and a state in which the backrest or the like reclines to a horizontal state and can be used as a bed, are conventionally known as seat units for first class or business class, for example (for example, see Patent Documents 1 and 2).

Since seat units such as these can ensure the privacy of passengers by forming a partitioned space as mentioned above, the above Patent Documents 1 and 2 disclose examples in which a plurality of these seat units are arranged side by side in the passenger cabin.

### Citation List

### Patent Literature

[Patent Document 1] Japanese Translation of PCT International Application Publication No. 2005-536390
[Patent Document 2] Japanese Translation of PCT International Application Publication No. 2014-511795

### Summary of Invention

### Technical Problem

In order to offer the sense of a private room as a partitioned space, the seat unit disclosed in Patent Document 1 is surrounded by a side wall with a forward facing seat and an attachment such as a footrest, and an opening portion is formed in the side surface on the foot side of the side wall for passengers to enter and exit from the side.

In the case that these seat units are arranged side by side, in order to create the previously mentioned opening portion for passengers to enter and exit from the aisle, the plurality of seat units must be arranged at a predetermined interval, and as a result, the usage efficiency of the space in the passenger cabin is reduced.

In contrast, the seat unit disclosed in Patent Document 2 forms a private room partitioned from the surrounding area by a seat shell formed by a front wall, a rear wall, and two side walls, and these seat units are arranged side by side such that space can be used efficiently.

However, since the entrances/exits of the individual seat units are formed between the side wall and the front wall, it is necessary to increase the width of the front wall in order to obtain the sense of a private room, and as a result, the width of the entrance/exit inevitably becomes narrow.

Accordingly, it is an object of the present invention to provide a seat unit capable of increasing the space usage efficiency in a passenger cabin even when a plurality of units are arranged side by side, while also ensuring a private space for passengers and widening the width of the entrance/exit to each unit.

### Solution to Problem

In order to achieve the above-described object, the aircraft seat unit according to the present invention includes: a seat configured to change form between a seat state and a bed state; a right side panel that is arranged upright at a right side of the seat; a left side panel that is arranged to oppose the right side panel; and a back surface panel that is arranged upright at a back surface side of the seat so as to connect the right side panel and the left side panel, wherein the right side panel stores a right side footrest portion in an extendable/storable manner and the left side panel stores a left side footrest portion in an extendable/storable manner.

In the aircraft seat unit according to a representative example of the present invention, the right side footrest portion includes a right side footrest member and a right side link mechanism, and the left side footrest portion includes a left side footrest member and a left side link mechanism.

In addition, the right side panel and the left side panel each further include a partition member attached to a respective upper end, wherein the partition member is configured to freely advance and retract.

Further, the aircraft seat unit according to a representative example of the present invention may be applied to a multiple seat structure in which another seat unit is arranged adjacent to at least one of its right side or its left side.

### Advantageous Effects of Invention

According to the present invention, it is possible to increase the space usage efficiency in a passenger cabin even when a plurality of units are arranged side by side, while also ensuring a private space for passengers and widening the width of the entrance to each unit.

### Brief Description of Drawings

FIG. 1 is a partial top view illustrating a passenger cabin layout example of an aircraft in which the aircraft seat unit according to a representative example of the present invention is applied.
FIG. 2 is a perspective view illustrating an overview of an aircraft seat unit applied to the region indicated by the reference numeral A1 in FIG. 1.
FIG. 3A is a cross-sectional view taken along the line B-B in FIG. 2, and illustrates a case in which the backrest of the seat is in a normal state.
FIG. 3B is a cross-sectional view taken along the line B-B in FIG. 2, and illustrates a case in which the backrest of the seat is in a reclining state.
FIG. 4A is a side view illustrating a state in which the aircraft seat unit according to the present invention is viewed from the direction of the arrow C in FIG. 2, and illustrates a stored state in which the footrest portion is stored.
FIG. 4B is a side view illustrating a state in which the aircraft seat unit according to the present invention is viewed from the direction of the arrow C in FIG. 2, and illustrates a first intermediate stage of the operation of deploying the footrest portion.
FIG. 4C is a side view illustrating a state in which the aircraft seat unit according to the present invention is viewed from the direction of the arrow C in FIG. 2, and illustrates a second intermediate stage of the operation of deploying the footrest portion.
FIG. 4D is a side view illustrating a state in which the aircraft seat unit according to the present invention is viewed from the direction of the arrow C in FIG. 2, and illustrates a deployed state in which the footrest portion is deployed.
FIG. 5A is a cross-sectional view taken along the line B-B in FIG. 2, and illustrates an intermediate state of moving the extension portion of the seat to the bed state.
FIG. 5B is a cross-sectional view taken along the line B-B in FIG. 2, and illustrates a state after the extension portion of the seat has been converted to the bed state.
FIG. 6A is a perspective view illustrating a first multiple seat structure applied to the region indicated by the reference numeral A2 in FIG. 1, and illustrates a case in which a plurality of seats are used individually.
FIG. 6B is a perspective view illustrating a first multiple seat structure applied to the region indicated by the reference numeral A2 in FIG. 1, and illustrates a case in which a plurality of seats are used in common.
FIG. 7A is a perspective view illustrating a second multiple seat structure applied to the region indicated by the reference numeral A3 in FIG. 1, and illustrates a case in which a plurality of seats are used individually.
FIG. 7B is a perspective view illustrating a second multiple seat structure applied to the region indicated by the reference numeral A3 in FIG. 1, and illustrates a case in which a plurality of seats are used in common.

### Description of Embodiment(s)

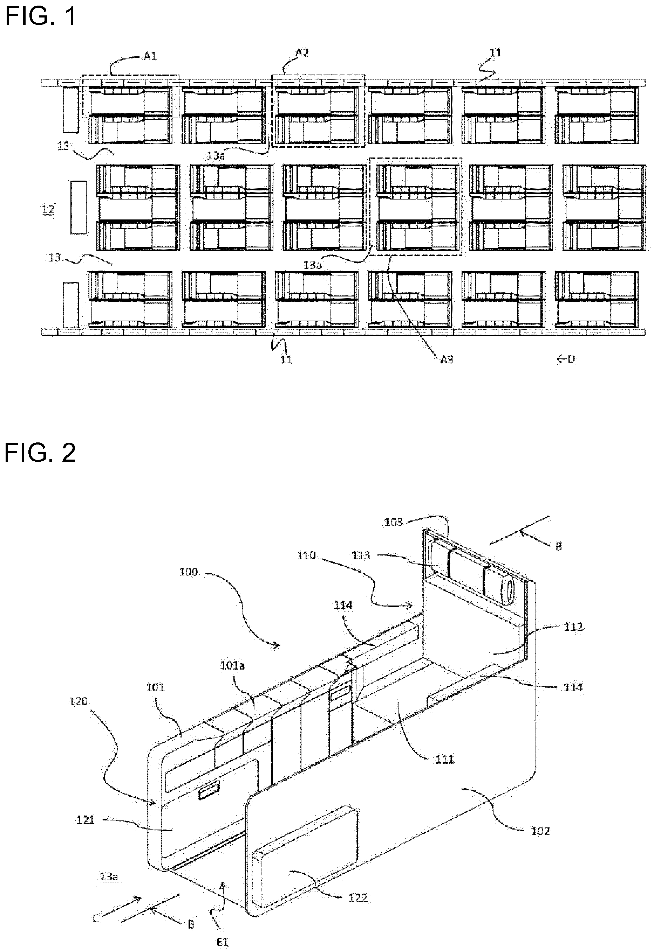

FIG. 1 is a partial top view illustrating a passenger cabin layout example of an aircraft in which the aircraft seat unit according to a representative example of the present invention is applied.

In FIG. 1, the upper left side of the Figure is the front side of the aircraft and the right side is the rear side of the aircraft.

As illustrated in FIG. 1, an aircraft 10 to which the aircraft seat unit according to the present invention is applied is constituted by an aircraft outer shell 11 and a passenger cabin 12 formed inside the aircraft outer shell 11.

In the passenger cabin 12, multiple seat structures (for example, see reference numerals A2 and A3) constituted by a plurality of seat units including an aircraft seat unit 100 having its longitudinal direction in the front-rear direction of the aircraft are installed, and an aisle 13 is formed therebetween. In addition, a front passage 13a is formed in front of and behind the multiple seat structures.

FIG. 2 is a perspective view illustrating an overview of an aircraft seat unit applied to the region indicated by the reference numeral A1 in FIG. 1.

As illustrated in FIG. 2, the aircraft seat unit 100 includes a seat 110 capable of changing form between a seat state and a bed state, a right side panel 101 that is arranged upright at the right side of the seat 110, a left side panel 102 that is arranged to oppose the right side panel 101, and a back surface panel 103 that is arranged upright at a back surface side of the seat 110 so as to connect the right side panel 101 and the left side panel 102.

In addition, a private room space is formed in the inner area surrounded by the right side panel 101, the left side panel 102, and the back surface panel 103, and an entrance/exit E1 that opens toward the front aisle 13a side is formed on the side opposing the rear side panel 103 of the right side panel 101 and the left side panel 102.

In the bed state, a footrest portion 120 that is continuous with the seat 110 is attached to the right side panel 101 and the left side panel 102.

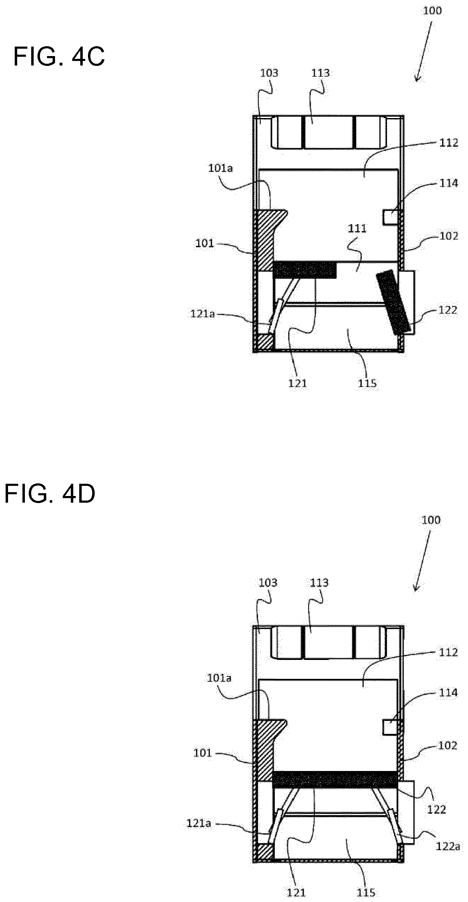

The footrest portion 120 includes a right side footrest member 121 and a left side footrest member 122. The right side panel 101 stores the right side footrest member 121 in a freely extendable/storable manner via the later-described right side link (see reference numeral 121a of FIG.4D) and the left side panel 102 stores the left side footrest member 122 in a freely extendable/storable manner via the later-described left side link (see reference numeral 122a of FIG.4D).

In addition, in the example illustrated in FIG. 2, the right side panel 101 includes a mini table 101a at its upper end.

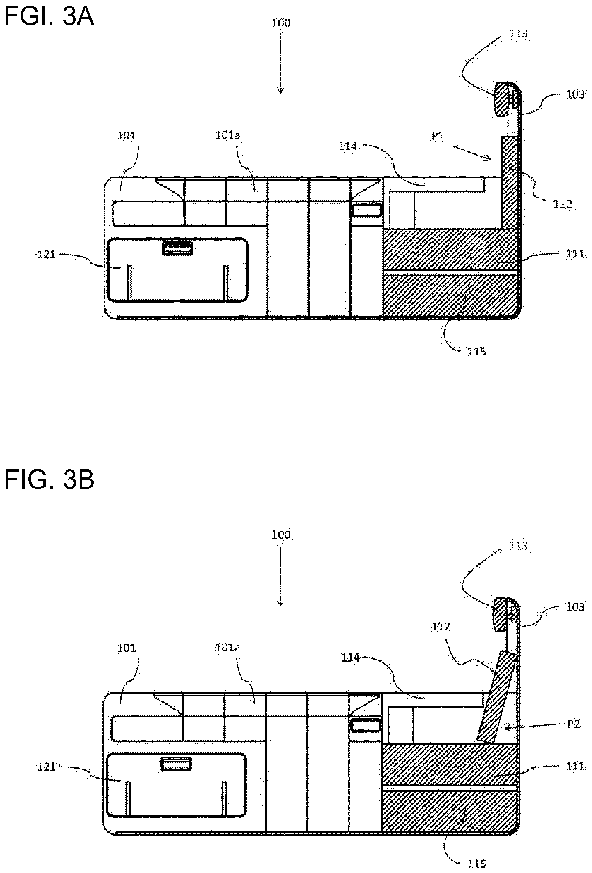

FIG. 3 is a cross-sectional view taken along the line B-B in FIG. 2, where FIG. 3A illustrates a case in which the backrest of the seat is in a normal state, and FIG. 3B illustrates a case in which the backrest of the seat is in a reclining state.

The seat 110 includes a seating portion 111, a backrest portion 112, a headrest 113, an armrest portion 114, an extension portion 115 for use in a bed state, and the like.

The backrest portion 112 of the seat 110 is configured to freely slide on the seating portion 111 side so that it can be set to an arbitrary angle between the upright position P1 illustrated in FIG. 3A and the inclined position P2 illustrated in FIG. 3B.

That is, as illustrated in FIG. 3A, when the seat 110 is in the normal state, the backrest portion 112 is disposed in the upright position P1 along the back surface panel 103. In contrast, as illustrated in FIG. 3B, when the seat 110 is in the reclining state, the backrest portion 112 is disposed in the inclined position P2.

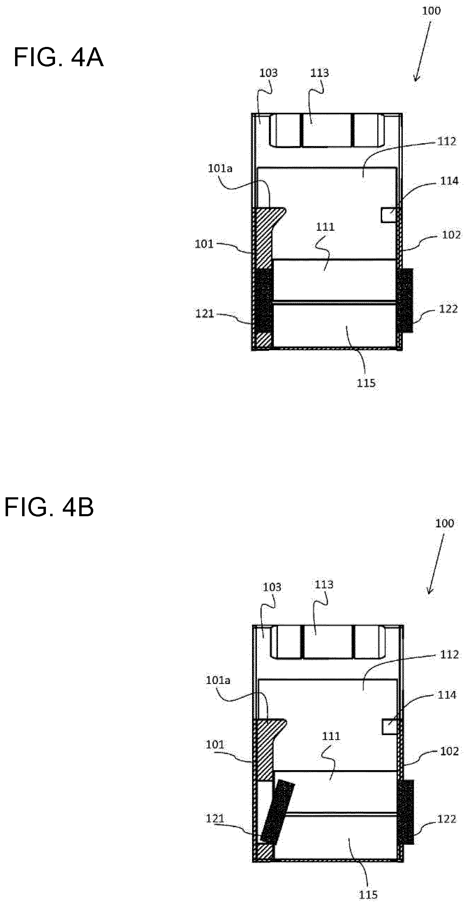

FIG. 4 is a side view illustrating a state in which the aircraft seat unit according to the present invention is viewed from the direction of the arrow C in FIG. 2, where FIG. 4A illustrates a stored state in which the footrest portion is stored, FIG. 4B illustrates a first intermediate stage of the operation of deploying the footrest portion, FIG. 4C illustrates a second intermediate stage of the operation of deploying the footrest portion, and FIG. 4D illustrates a deployed state in which the footrest portion is deployed.

It should be noted that FIG. 4A illustrates the state of the perspective view depicted in FIG. 2, where the same respective components as those depicted in FIG. 2 are denoted with the same reference numerals in FIG. 4, and a redundant explanation of elements is omitted when not necessary.

In the aircraft seat 100 according to a representative example of the present invention, as illustrated in FIG. 4A, in the stored state, the right side footrest member 121 and the left side footrest member 122 are stored in upright stored positions in the right side panel 101 and the left side panel 102, respectively.

When deploying this footrest portion 120, as illustrated in FIG. 4B, one of the footrest members, for example, the right side link 121a attached to the right side footrest member 121 is operated to initiate the movement of the right side footrest member 121 from the stored position to the deployed position.

Next, as illustrated in FIG. 4C, after moving the right side footrest member 121 to the deployed position, the left side link 122a is operated to initiate the movement of the left side footrest member 122 from the stored position to the deployed position.

Subsequently, as illustrated in FIG. 4D, the left side footrest member 122 is moved to the deployed position, and the deployment of the footrest 120 is completed.

It should be noted that, in FIG. 4, although the operation of deploying the footrest unit 120 from the stored position to the deployment position has been described, the operations of FIG.4D to FIG. 4A can be performed in the opposite order to store the footrest unit 120 in the stored position from the deployed position.

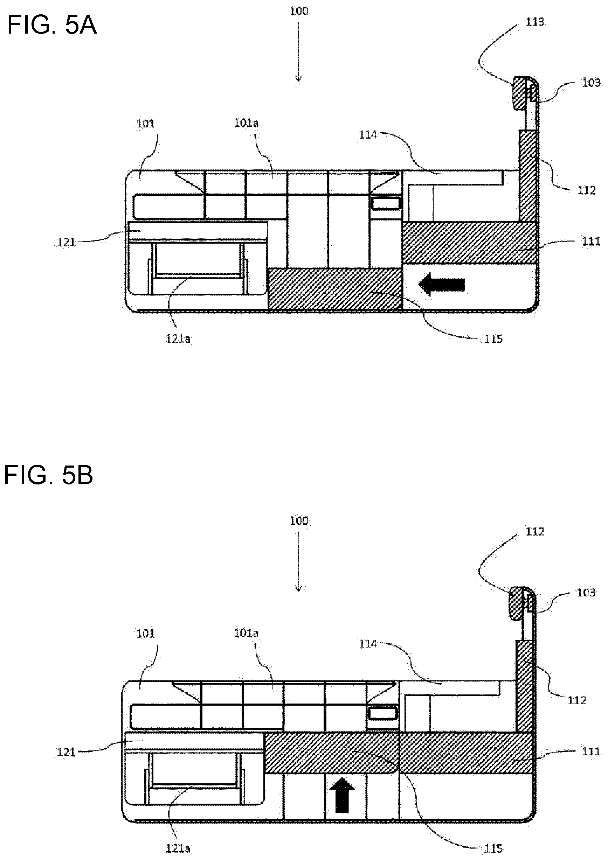

FIG. 5 is a cross-sectional view taken along the line B-B in FIG. 2, where FIG. 5A illustrates an intermediate state of moving the extension portion of the seat to the bed state, and FIG. 5B illustrates a state after the extension portion of the seat has been converted to the bed state.

In the aircraft seat unit 100 according to a representative example of the present invention, in the case of changing the seat 110 from the seating state to the bed state, as illustrated in FIG. 5A, the extension portion 115 stored in the lower portion of the seating portion 111 is first slid to a position between the seating portion 111 and the footrest portion 120 (the right side footrest member 121 in the Figures).

Next, as illustrated in FIG. 5B, by raising the extension portion 115 so that the upper surface of the extension portion 115 is substantially flush with the upper surfaces of the seating portion 111 and the footrest portion 120, a bed state that is flat from the seating portion 111 to the footrest 120 is formed.

Here, any configuration (not shown) may be utilized as the configuration for raising and lowering the extension portion 115. For example, an elevation mechanism such as an X-shaped link mechanism and a cylinder mechanism, or alternatively, a structure in which the side surface of the extension portion 115 is directly attached to the right side panel 101 and the left side panel 102 may be used.

By including these configurations, in the aircraft seat unit according to the present invention, a seat can be surrounded by the right side panel, the left side panel, and the rear side panel to ensure the sense of a private room.

In addition, by forming an entrance/exit having a width that corresponds to the space between the right side panel and the left side panel at a position that opposes the back surface panel, it is possible to ensure a wide width of the entrance/exit within a desired range.

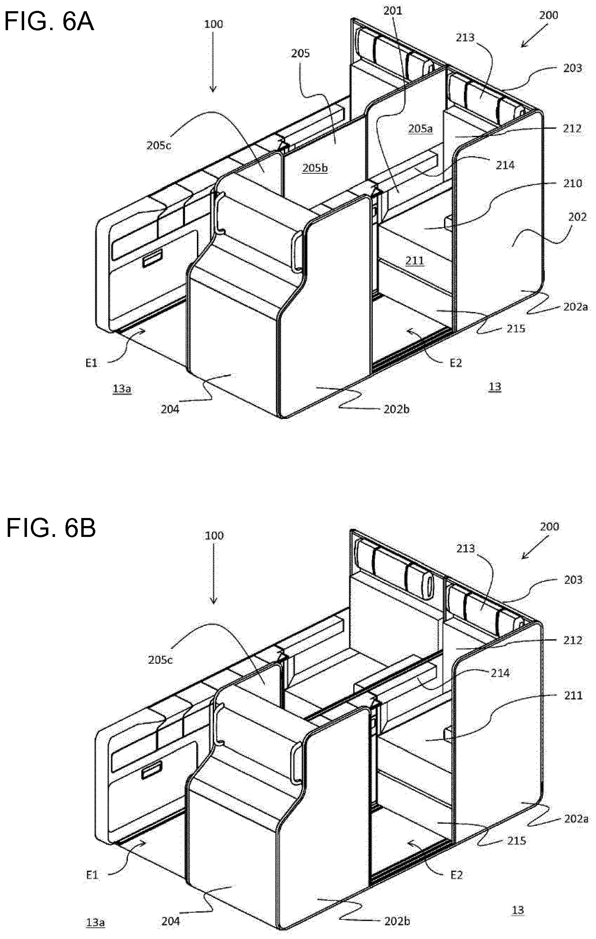

FIG. 6 is a perspective view illustrating a first multiple seat structure applied to the region indicated by the reference numeral A2 in FIG. 1, where FIG. 6A illustrates a case in which a plurality of seats are used individually, and FIG. 6B illustrates a case in which a plurality of seats are used in common.

It should be noted that, in FIG. 6, the same reference numerals are given to those configurations shared with the representative examples illustrated in FIG. 2 to FIG. 5, and a redundant description thereof will be omitted.

As illustrated in FIG. 6A, in the first multiple seat structure, another type of aircraft seat unit 200 is arranged adjacent to the left side panel 102, for example, of the aircraft seat unit 100 according to the present invention.

The aircraft seat unit 200 includes a seat 210 capable of changing form between a seat state and a bed state, a right side panel 201 that is arranged upright at the right side of the seat 210, a left side panel 202 that is arranged to oppose the right side panel 201, a back surface panel 203 that is arranged upright at a back surface side of the seat 110 so as to connect the right side panel 201 and the left side panel 202, and a foot side panel 204 arranged upright to oppose the back surface panel 203.

The aircraft seat unit 200 is surrounded by the right side panel 201, the left side panel 202, the back surface panel 203, and the foot side panel 204, and a private room space is formed in the inner area thereof.

The seat 210 includes a seating portion 211, a backrest portion 212, a headrest 213, an armrest portion 214, an extension portion 215 for use in a bed state, and the like. In addition, the backrest portion 212 of the seat 210 is configured to be slidable, similar to the one depicted in FIG. 3.

In FIG. 6, as described above, the aircraft seat unit 100 has an entrance/exit E1 that faces the back surface panel 103 formed in communication with the front aisle 13a, such that users can enter and exit from the entrance/exit E1.

In contrast, the left side panel 202 is divided into a first left side panel 202a and a second left side panel 202b, and an entrance/exit E2 that opens to the side of the aisle 13 is formed between the first left side panel 202a and the second left side panel 202b.

On the inner side of the foot side panel 204, internal components (not illustrated in the Figures) such as a footrest portion, a storage portion, a television monitor, and the like are provided.

In addition, a partition member 205 for partitioning the adjacent aircraft seat units 100 from each other is provided at the upper end of the right side panel 201.

In the multiple seat structure depicted in FIG. 6, the partition member 205 is divided into, for example, a first partition member 205a, a second partition member 205b, and a third partition member 205c.

In addition, as depicted in FIG. 6B, the first partition member 205a and the second partition member 205b are freely movable upward and downward in the vertical direction with respect to the right side panel 201, for example, and by lowering the first partition member 205a and the second partition member 205b, it is possible to cause the interior spaces of the two adjacent seat units 100 and 200 to communicate with each other in the vicinity of the upper body of the user.

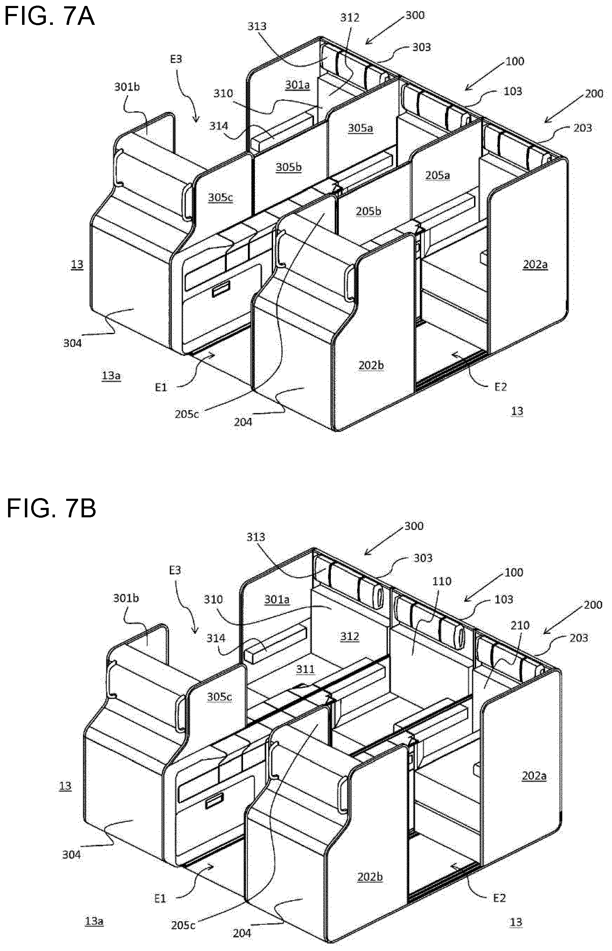

FIG. 7 is a perspective view illustrating a second multiple seat structure applied to the region indicated by the reference numeral A3 in FIG. 1, where FIG. 7A illustrates a case in which a plurality of seats are used individually, and FIG. 7B illustrates a case in which a plurality of seats are used in common.

It should be noted that in FIG. 7, the same reference numerals are given to those configurations shared with the specific examples illustrated in FIG. 2 to FIG. 6, and a redundant description thereof will be omitted.

As illustrated in FIG. 7A, in the second multiple seat structure, other types of aircraft seat units 200 and 300 are respectively arranged adjacent to the right side panel 101 and the left side panel 102 of the aircraft seat unit 200 according to the present invention.

The aircraft seat unit 300 includes a seat 310 capable of changing form between a seat state and a bed state, a right side panel 301 that is arranged upright at the right side of the seat 310, a left side panel (not illustrated in the Figures) that is arranged to oppose the right side panel 301, a back surface panel 303 that is arranged upright at a back surface side of the seat 310 so as to connect the right side panel 301 and the left side panel 302, and a foot side panel 304 arranged upright to oppose the back surface panel 303.

Similar to the aircraft seat unit 200 illustrated in FIG. 6, the aircraft seat unit 300 is surrounded by the right side panel 301, the left side panel, the back surface panel 303, and the foot side panel 304, and a private room space is formed in the inner area thereof.

The seat 310 includes a seating portion 311, a backrest portion 312, a headrest 313, an armrest portion 314, an extension portion (not illustrated in the Figures) for use in a bed state, and the like. In addition, the backrest portion 312 of the seat 310 is configured to be slidable, similar to the one depicted in FIG. 3.

In FIG. 7, as described above, the aircraft seat unit 100 has an entrance/exit E1 that faces the back surface panel 103 formed in communication with the front aisle 13a, such that users can enter and exit from the entrance/exit E1.

In contrast, the right side panel 301 is divided into a first right side panel 301a and a second right side panel 301b, and an entrance/exit E3 that opens to the side of the aisle 13 is formed between the first right side panel 301a and the second right side panel 301b.

Similar to the aircraft seat unit 200 depicted in FIG. 6, on the inner side of the foot side panel 304, internal components (not illustrated in the Figures) such as a footrest portion, a storage portion, a television monitor, and the like are provided.

In addition, a partition member 305 for partitioning the adjacent aircraft seat units 100 from each other is provided at the upper end of the left side panel (not illustrated in the Figures).

In the multiple seat structure depicted in FIG. 7, the partition member 305 is divided into, for example, a first partition member 305a, a second partition member 305b, and a third partition member 305c, and as depicted in FIG. 7B the first partition member 305a and the second partition member 305b are freely movable upward and downward in the vertical direction with respect to the left side panel, for example.

In addition, by lowering the first partition member 205a and the second partition member 205b of the seat unit 200 and the first partition member 305a and the second partition member 305b of the seat unit 300, it is possible to cause the interior spaces of the three adjacent seat units 100, 200, and 300 to communicate with each other in the vicinity of the upper body of the user.

As illustrated in FIG. 6 and FIG. 7, multiple seat structures to which the aircraft seat unit according to the present invention is applied include a seat unit having an entrance/exit communicating with the front passage, thereby increasing the space usage efficiency in the passenger cabin even when a plurality of units are arranged side by side, while also ensuring a private space for passengers and widening the width of the entrance to each unit

In addition, by making it possible to store a partition member disposed between a plurality of seat units arranged side by side, it is possible to provide a multiple seat structure for groups of two or three passengers that can be used by connecting two or three adjacent seats while maintaining the privacy of a private room.

Although the configuration of the aircraft seat unit according to a representative example of the present invention has been described above, the aircraft seat unit according to the present invention is not limited to the above-mentioned specific examples, and various modifications can be made.

For example, in the above-described specific example, cases in which two or three seat units are arranged side by side were illustrated as the multiple seat structure, but if the seat unit having the structure illustrated in FIG. 2 is utilized as the intermediate seat unit, a configuration in which four or more seat units are arranged side by side may also be used.

In addition, in the specific examples of FIG. 6 and FIG. 7, a case of arranging another type of seat unit having an entrance/exit on the right side panel or the left side panel was illustrated as the multiple seat structure, but a configuration in which two or three of the aircraft seat units illustrated in FIG. 2 are arranged side by side may also be used.

Further, in the specific examples of FIG. 6 and FIG. 7, a case in which a partition member is provided on the right side panel or the left side panel of another type of seat unit was illustrated, but in the aircraft seat unit according to the present invention illustrated in FIG. 2, as well, a partition member configured to freely move upward and downward may be provided on either or both of the right side panel or the left side panel.

In addition, it is also possible to make various modifications to the above-described embodiments without departing from the spirit of the present invention.

### Reference Signs List

- 10: Aircraft
- 11: Aircraft outer shell
- 12: Passenger cabin
- 13: Aisle
- 13a: Front aisle
- 100: Aircraft seat unit
- 101, 201, 301: Right side panel
- 102, 202: Left side panel
- 103, 203, 303: Back surface panel
- 110: Seat
- 111, 211, 311: Seating portion
- 112 212, 312: Backrest portion
- 113, 213, 315: Headrest
- 114, 214, 314: Armrest portion
- 115, 215: Extension portion
- 120: Footrest portion
- 121: Right side footrest member
- 121a: Right side link
- 122: Left side footrest member
- 122a: Left side link
- 204, 304: Foot side panel
- 205, 305: Partition member

## Claims

1. An aircraft seat unit comprising:
a seat configured to change form between a seat state and a bed state;
a right side panel that is arranged upright at a right side of the seat;
a left side panel that is arranged to oppose the right side panel; and
a back surface panel that is arranged upright at a back surface side of the seat so as to connect the right side panel and the left side panel,
wherein the right side panel stores a right side footrest portion in an extendable/storable manner and the left side panel stores a left side footrest portion in an extendable/storable manner.

2. The aircraft seat unit according to claim 1, wherein:
the right side footrest portion includes a right side footrest member and a right side link mechanism; and
the left side footrest portion includes a left side footrest member and a left side link mechanism.

3. The aircraft seat unit according to either of claims 1 or 2, wherein:
the right side panel and the left side panel each further include a partition member attached to a respective upper end, the partition member configured to freely advance and retract.

4. The multiple seat structure comprising:
an aircraft seat unit according to any one of claims 1 to 3, and
another seat unit arranged adjacent to at least one of a right side or a left side of the aircraft seat unit.
